# EUROPÄISCHE PATENTSCHRIFT

(11) **EP 3 433 319 B1**
(45) Veröffentlichungstag und Bekanntmachung des Hinweises auf die Patenterteilung: **09.09.2020**
(21) Anmeldenummer: 17712982.2
(22) Anmeldetag: 22.03.2017
(51) Int. Cl.: C08L 69/00

(54) **POLYCARBONAT-ZUSAMMENSETZUNGEN MIT VERBESSERTER HYDROLYSEBESTÄNDIGKEIT**
POLYCARBONATE COMPOSITIONS HAVING IMPROVED HYDROLYTIC STABILITY
COMPOSITIONS DE POLYCARBONATE PRESENTANT UNE RESISTANCE AMELIOREE A L'HYDROLYSE

(30) Priorität: 23.03.2016 EP 16161898
(43) Veröffentlichungstag der Anmeldung: 30.01.2019
(73) Patentinhaber: Covestro Deutschland AG, 51373 Leverkusen (DE)
(72) Erfinder: ECKEL, Thomas, 41540 Dormagen (DE); PUPOVAC, Kristina, 40213 Düsseldorf (DE)
(74) Vertreter: Levpat
(86) Internationale Anmeldenummer: PCT/EP2017/056870
(87) Internationale Veröffentlichungsnummer: WO 2017/162769

(56) Entgegenhaltungen:
- WO-A1-01/66635
- WO-A1-02/059203
- WO-A1-2009/040772

## Beschreibung

Die vorliegende Erfindung betrifft flammwidrig ausgerüstete Polycarbonat-Zusammensetzungen enthaltend kleine Talkmengen, die Verwendung der Zusammensetzungen zur Herstellung von Formkörpern sowie die Formkörper selbst.

Zusammensetzungen aus Polycarbonat und ABS-Polymerisaten sind seit langem bekannt. In zahlreichen Patentanmeldungen wurde zudem beschrieben, dass sich solche Zusammensetzungen durch den Einsatz von Oligophosphaten flammwidrig ausrüsten lassen und weiterhin Füllstoffe enthalten können.

US 2009/0215949 A1 offenbart Formmassen aus Polycarbonat und ABS hergestellt durch Massepolymerisation und/oder MBS, die mit auf Bisphenol-A-basierendem Oligophosphat flammwidrig ausgerüstet sind und anorganische Füllstoffe wie Kaolin, Talk und Aluminiumoxid enthalten. Es wird beschrieben, dass durch den Zusatz von Füllstoffen die Flammschutzeigenschaften verbessert werden.

In EP 1 026 205 A1 werden Polymermischungen aus aromatischem Polycarbonat, ABS-Pfropfpolymerisat und/oder styrolhaltigem Copolymer beschrieben, die z.B. Kaolin, Talk, Glimmer, Wollastonite, Glasfaser und Mischungen daraus als anorganischen Füllstoffe enthalten und sich durch eine ausgezeichnete Hydrolysebeständigkeit und Flammwidrigkeit auszeichnen. Als Flammschutzmittel werden Triphenylphosphat und Resorcinol-bis(dixylenyl) phosphat eingesetzt. Eine Verwendung von Bisphenol A bis (diphenyl phosphat) als Flammschutzmittel wird nicht erwähnt.

EP 1 164 168 A1 offenbart schlagzähmodifzierte PC-Formmassen, deren Hydrolysebeständigkeit durch Zusatz eines Talks in einer Konzentration von 0.1 - 5% und einem mittleren Partikeldurchmesser von 0.1 - 50 µm verbessert wird. Die Polymermischungen sind mit Triphenylphosphat als Flammschutzmittel flammwidrig ausgerüstet.

WO 2012/106392 A1 offenbart Polycarbonat Zusammensetzungen enthaltend ABS und Resorcinol Diphosphat als Flammschutzmittel sowie Talk als Füllstoff. Die Polymermischungen zeichnen sich durch eine gute Flammwidrigkeit und einen reduzierten Halogengehalt sowie gute mechanische Eigenschaften aus.

WO 01/48074 A1 offenbart flammwidrige PC/ABS-Zusammensetzungen mit exzellenter Flammwidrigkeit, guter Chemikalienbeständigkeit sowie geringem Werkzeugabrieb und geringer Belagsbildung enthaltend 40 -98 Gew.-Teile Polycarbonats, 0,5 - 50 Gew.-Teile Pfropfpolymerisats, 0,5 - 40 Gew.-Teile Phosphor-haltigen Flammschutzmittels und 0,05 - 40 Gew.-Teile eines speziellen hochreinen Talks.

WO 01/66635 A1 beschreibt Polycarbonat-Zusammensetzungen mit einem niedrigen Fluorgehalt, ausgerüstet mit einem Bisphenol-A-basierendem Oligophosphat als Flammschutzmittel und enthaltend 0-5 Gew.-Teile eines feinteiligen partikel-, schuppen- oder faserförmigen anorganischen Materials, bevorzugt Talk, die sich durch eine ausgezeichnete Flammwidrigkeit sowie gute Chemikalien- und Wärmeformbeständigkeit auszeichnen.

WO 02/059203 A1 beschreibt flammwidrige, Talk und Phosphorsäureester enthaltende PC/ABS-Zusammensetzungen, wobei Talktypen unterschiedlicher Eisengehalts eingesetzt werden. Es wird offenbart, dass die Formmassen enthaltend Talktypen mit einem geringeren Eisengehalt verbesserte Kerbschlagzähigkeit aufweisen.

WO 2009/080246 A1 offenbart flammwidrige Polycarbonat-Zusammensetzungen, in welchen durch eine Kombination aus einem Talk und einer Phosphinsäuresalz als Flammschutzmittel eine verbesserte Flammwidrigkeit, Wärmeformbeständigkeit, einen besseren ESC-Verhalten sowie höheren E-Modul und höhere Hydrolysebeständigkeit erreicht wird. In Zusammensetzungen wie in dieser Offenbarung gezeigt, sind aber Reißdehnung und Bindenahtfestigkeit auf einem niedrigen Niveau.

WO 2009/040772 A1 offenbart Zusammensetzungen enthaltend Polycarbonat, Polysiloxan-Polycarbonat Copolymer, Schlagzähmodifikator und Füllstoff mit einer Teilchengröße d₅₀ von weniger als 2,7 µm. Die Zusammensetzungen zeichnen sich durch gute Flammwidrigkeit, Biegemodul und Schlagzähigkeit sowie eine gute Oberflächenqualität aus.

Die oben genannten Zusammensetzungen eignen sich aber nicht für Bauteile mit komplexen Geometrien und dünnen Wandstärken, bei denen besondere Anforderungen an mechanische Eigenschaften gestellt werden. Unter mechanischen Eigenschaften für solche Anwendungen ist eine vorteilhafte Kombination aus hohem Zug-E-Modul, hoher Bindenahtfestigkeit und hoher Reißdehnung zu verstehen.

In keinem der genannten Dokumente werden zudem hydrolysestabile Polycarbonat-Zusammensetzungen beschrieben, die die erforderlichen mechanischen Eigenschaften aufweisen.

Es war daher wünschenswert, Polycarbonat-Zusammensetzungen bereitzustellen, die sich durch gute mechanische Eigenschaften, gute Chemikalienbeständigkeit und guter Flammwidrigkeit bei gleichzeitig guter Hydrolysebeständigkeit auszeichnen.

Es war weiterhin wünschenswert, Polycarbonat-Zusammensetzungen bereitzustellen, die sich durch gute Bindenahtfestigkeit und hohe Reißdehnung, hohen Zug-E-Modul, gute Chemikalienbeständigkeit gegenüber einer Toluol/Isopropanol Mischung und guter Flammwidrigkeit (Klassifizierung und Nachbrennzeit) bei einer Bauteildicke von 1,5 mm und gleichzeitig guter Hydrolysebeständigkeit auszeichnen.

Es wurde nun überraschenderweise gefunden, dass Zusammensetzungen enthaltend
A) 62 bis 96 Gew.-%, bevorzugt 64 bis 95 Gew.-%, besonders bevorzugt 66 bis 94 Gew.-% mindestens eines Polymers ausgewählt aus der Gruppe bestehend aus linearem aromatischen Polycarbonat und linearem aromatischen Polyestercarbonat,
B) 1 bis 15 Gew.-%, bevorzugt 2 bis 12 Gew.-%, besonders bevorzugt 3 bis 10 Gew.-% mindestens eines Pfropfpolymerisats hergestellt durch Emulsionspolymerisation aus B.1) 5 bis 95 Gew.-%, bezogen auf B einer Mischung aus
   B.1.1) 50 bis 99 Gew.-%, bezogen auf B.1 mindestens eines Monomeren ausgewählt aus der Gruppe der Vinylaromaten, kernsubstituierten Vinylaromaten und Acrylsäure-(C1-C8)-Alkylester oder Mischungen dieser Verbindungen
      und
   B.1.2) 1 bis 50 Gew.-% bezogen auf B.1 mindestens eines Monomeren ausgewählt aus der Gruppe der Vinylcyanide, Acrylsäure-(C1-C8)-Alkylester, ungesättigte Carbonsäuren und Derivate ungesättigter Carbonsäuren
   B.2) 5 bis 95 Gew.-%, bezogen auf B einer kautschukhaltigen Pfropfgrundlage enthaltend einen Dienkautschuk oder ein Copolymerisat eines Dienkautschuks mit einem weiteren copolymerisierbaren Monomeren,
C) 0 bis 5,8 Gew.-%, bevorzugt 0 bis 5,5 Gew.-%, besonders bevorzugt 0 bis 5,2 Gew.-% kautschukfreies Vinyl(co)polymerisat,
D) 1 bis 20 Gew.-%, bevorzugt 1 bis 19 Gew.-%, besonders bevorzugt 2 bis 18 Gew.-% mindestens eines phosphorhaltigen Flammschutzmittels der allgemeinen Formel (IV) 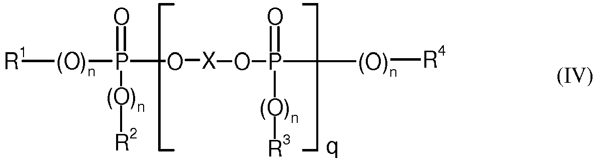 worin
   R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
   n unabhängig voneinander, 0 oder 1, vorzugsweise ist n gleich 1.
   q für ganzzahlige Werte von 1 bis 30, bevorzugt 1 bis 20, besonders bevorzugt 1 bis 10, im Falle von Mischungen für Durchschnittswerte von 1,01 bis 5,0, bevorzugt 1,02 bis 3,0, weiter bevorzugt 1,05 bis 2,00, und besonders bevorzugt von 1,08 bis 1,60 steht
   X einen mehrkernigen aromatischen Rest mit 13 bis 30 C-Atomen, der gegebenenfalls mit Halogen- und/oder Alkylgruppen, vorzugsweise Chlor, Brom und/oder C1 bis C4-Alkyl substituiert sein kann, bedeuten,
E) 0,8 bis 4,0 Gew.-%, bevorzugt 0,9 bis 3,5 Gew.-%, besonders bevorzugt 1,0 bis 3,0 Gew.-% eines mineralischen Füllstoffs auf Basis von Talk, mit einer Teilchengröße d₅₀ von 0,2 bis 10 µm und vorzugsweise einem MgO-Gehalt von 28 bis 35 Gew.-% bezogen auf die Komponente E,
F) 0,1 bis 20,0 Gew.-%, bevorzugt 0,2 bis 15 Gew.-%, besonders bevorzugt 0,3 bis 10 Gew.-% mindestens eines Polymeradditivs,
wobei die Zusammensetzungen kein Pfropfpolymerisat hergestellt in Massepolymerisation enthalten,
die vorteilhaften Eigenschaften aufweisen.

Nachfolgend werden weitere Ausführungsformen 1 bis 15 der vorliegenden Erfindung beschrieben:
1. Zusammensetzungen enthaltend
   A) 62 bis 96 Gew.-% mindestens eines Polymers ausgewählt aus der Gruppe bestehend aus linearem aromatischen Polycarbonat und linearem aromatischen Polyestercarbonat,
   B) 1 bis 15 Gew.-% mindestens eines Pfropfpolymerisats hergestellt durch Emulsionspolymerisation aus
      B.1) 5 bis 95 Gew.-%, bezogen auf B, einer Mischung aus
         B.1.1) 50 bis 99 Gew.-%, bezogen auf B.1, mindestens eines Monomeren ausgewählt aus der Gruppe der Vinylaromaten, kernsubstituierten Vinylaromaten und Acrylsäure-(C1-C8)-Alkylester oder Mischungen dieser Verbindungen
            und
         B.1.2) 1 bis 50 Gew.-%, bezogen auf B.1, mindestens eines Monomeren ausgewählt aus der Gruppe der Vinylcyanide, Acrylsäure-(C1-C8)-Alkylester, ungesättigte Carbonsäuren und Derivate ungesättigter Carbonsäuren
      B.2) 5 bis 95 Gew.-%, bezogen auf B, einer kautschukhaltigen Pfropfgrundlage enthaltend einen Dienkautschuk oder ein Copolymerisat eines Dienkautschuks mit einem weiteren copolymerisierbaren Monomeren,
   C) 0 bis 5,8 Gew.-% kautschukfreies Vinyl(co)polymerisat,
   D) 1 bis 20 Gew.-% mindestens eines phosphorhaltigen Flammschutzmittels der allgemeinen Formel (IV) 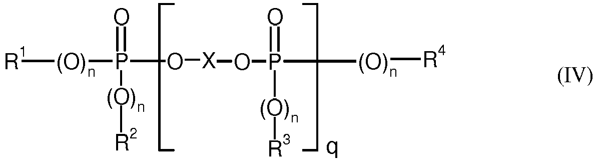 worin
      R1, R2, R3 und R4, unabhängig voneinander jeweils gegebenenfalls halogeniertes C1 bis C8-Alkyl, jeweils gegebenenfalls durch Alkyl substituiertes C5 bis C6-Cycloalkyl, C6 bis C20-Aryl oder C7 bis C12-Aralkyl,
      n unabhängig voneinander 0 oder 1
      q für ganzzahlige Werte von 1 bis 30
      X einen mehrkernigen aromatischen Rest mit 13 bis 30 C-Atomen, der gegebenenfalls mit Halogen- und/oder Alkylgruppen substituiert sein kann, bedeuten,
   E) 0,8 bis 4,0 Gew.-% eines mineralischen Füllstoffs auf Basis von Talk mit einer Teilchengröße d₅₀ von 0,2 bis 10 µm,
   F) 0,1 bis 20,0 Gew.-% mindestens eines Polymeradditivs,
   wobei die Zusammensetzungen kein Pfropfpolymerisat hergestellt in Massepolymerisation enthalten.
2. Zusammensetzungen gemäß Ausführungsform 1 enthaltend
   64 bis 95 Gew.-% der Komponente A,
   2 bis 12 Gew.-% der Komponente B,
   0 bis 5,5 Gew.-% der Komponente C,
   1 bis 19 Gew.-% der Komponente D,
   0,9 bis 3,5 Gew.-% der Komponente E und
   0,2 bis 15 Gew.-% der Komponente F.
3. Zusammensetzungen gemäß Ausführungsform 1 enthaltend
   66 bis 94 Gew.-% der Komponente A,
   3 bis 10 Gew.-% der Komponente B,
   0 bis 5,2 Gew.-% der Komponente C,
   2 bis 18 Gew.-% der Komponente D,
   1,0 bis 3,0 Gew.-% der Komponente E und
   0,3 bis 10 Gew.-% der Komponente F.
4. Zusammensetzungen gemäß einer der vorherigen Ausführungsformen, wobei die Komponente A ein gewichtsgemitteltes Molekulargewicht Mw von 24.000 bis 28.000 g/mol aufweist.
5. Zusammensetzungen gemäß einer der vorherigen Ausführungsformen, wobei die Komponente B aus 40 bis 70 Gew.-% B.1 und 60 bis 30 Gew.-% B.2, jeweils bezogen auf B, besteht.
6. Zusammensetzungen gemäß einer der vorherigen Ausführungsformen, wobei als Komponente B1.1 Styrol und als Komponente B1.2 Acrylnitril eingesetzt wird.
7. Zusammensetzungen gemäß einer der vorherigen Ausführungsformen, wobei es sich bei Komponente D um eine Verbindung gemäß folgender Struktur handelt 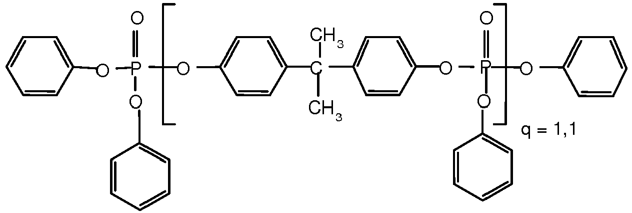
8. Zusammensetzungen gemäß einer der vorherigen Ausführungsformen, wobei als Komponente E ein mineralischer Füllstoff mit einem Talkgehalt von mindestens 98 Gew.-% verwendet wird.
9. Zusammensetzungen gemäß einer der vorherigen Ausführungsformen, wobei es sich bei Komponente E um Talk mit einen MgO-Gehalt von 28 bis 35 Gew.-%, einen SiO₂-Gehalt von 55 bis 65 Gew.-% und einen Al₂O₃-Gehalt von kleiner 1 Gew.-% handelt.
10. Zusammensetzungen gemäß einer der vorherigen Ausführungsformen, wobei die Komponente E eine Teilchengröße d₅₀ von 0,7 bis 2,5 µm aufweist.
11. Zusammensetzungen gemäß einer der vorherigen Ausführungsformen, wobei die Komponente E einen MgO-Gehalt von 30,5 bis 32 Gew.-% aufweist.
12. Zusammensetzungen gemäß einer der vorherigen Ausführungsformen, wobei als Komponente F eines oder mehrere Additive verwendet wird aus der Gruppe bestehend aus Flammschutzsynergisten, Antidrippingmittel, Gleit- und Entformungsmittel, Fließfähigkeitshilfsmittel, Antistatika Leitfähigkeitsadditive, Stabilisatoren, antibakteriell wirkende Additive, kratzfestigkeitsverbessernde Additive, IR-Absorbentien, optische Aufheller, fluoreszierende Additive, Farbstoffe, Pigmente sowie Brönstedt-saure Verbindungen.
13. Zusammensetzungen gemäß einer der vorherigen Ausführungsformen, wobei die Zusammensetzungen nur aus den Komponenten A bis F bestehen.
14. Verwendung von Zusammensetzungen gemäß einer der Ausführungsformen 1 bis 13 zur Herstellung von Formkörpern.
15. Formkörper erhältlich aus Zusammensetzungen gemäß einer der Ausführungsformen 1 bis 13.

### Komponente A

Erfindungsgemäß geeignete lineare aromatische Polycarbonate und lineare Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 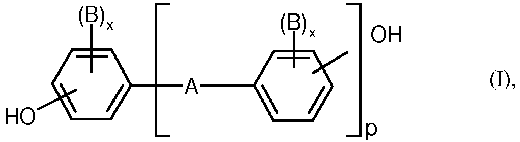 wobei
- A: eine Einfachbindung, C₁ bis C₅-Alkylen, C₂ bis C₅-Alkyliden, C₅ bis C₆-Cycloalkyliden, -O-,-SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 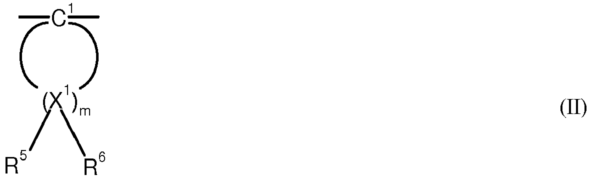 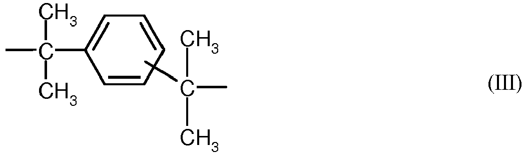
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α,Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Geeignet sind sowohl Homopolycarbonate als auch Copolycarbonate.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid bei 25°C). Das gewichtsgemittelte Molekulargewicht Mw der aromatischen Polycarbonate und Polyestercarbonate liegt bevorzugt im Bereich von 15.000 bis 35.000 g/mol, weiter bevorzugt im Bereich von 20.000 bis 33.000 g/mol, besonders bevorzugt 23.000 bis 30.000 g/mol, ganz besonders bevorzugt 24.000 bis 28.000 g/mol bestimmt durch GPC (Gelpermeationschromatographie in Methylenchlorid mit Polycarbonat als Standard).

### Komponente B

Erfindungsgemäß als Komponente B einsetzbar sind ein oder mehrere Pfropfpolymerisate aus
B.1) 5 bis 95 Gew.-%, vorzugsweise 30 bis 80 Gew.-%, besonders bevorzugt 40 bis 70 Gew.-% einer Mischung aus
   B.1.1) 50 bis 99 Gew.-%, bevorzugt 65 bis 85 Gew.-%, besonders bevorzugt 70 bis 80 Gew.-% bezogen auf B.1, bevorzugt mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Acrylsäure-(C1-C8)-Alkylester (wie beispielsweise, n-Butylacrylat, tert.-Butylacrylat) oder Mischungen dieser Verbindungen
      und
   B.1.2) 1 bis 50 Gew.-%, bevorzugt 15 bis 35 Gew.-%, besonders bevorzugt 20 bis 30 Gew.-% bezogen auf B.1 mindestens eines Monomeren ausgewählt aus der Gruppe der Vinylcyanide (wie beispielsweise ungesättigte Nitrile wie Acrylnitril und Methacrylnitril), Acrylsäure-(C1-C8)-Alkylester (wie beispielsweise n-Butylacrylat, tert.-Butylacrylat), ungesättigte Carbonsäuren und Derivate ungesättigter Carbonsäuren (beispielsweise Maleinsäureanhydrid und N-Phenyl-Maleinimid)
B.2) 5 bis 95 Gew.-%, vorzugsweise 20 bis 70 Gew.-%, besonders bevorzugt 30 bis 60 Gew.-% einer kautschukhaltigen Pfropfgrundlage enthaltend einen Dienkautschuk oder ein Copolymerisat eines Dienkautschuks mit einem weiteren copolymerisierbaren Monomeren.

Die Pfropfgrundlagen B.2 besitzen Glasübergangstemperaturen von < 10°C, vorzugsweise von < 0°C, besonders bevorzugt von < -20°C.

Die Glasübergangstemperatur wird, sofern in der vorliegenden Erfindung nicht ausdrücklich anders beschrieben, für alle Komponenten mittels dynamischer Differenzkalorimetrie (DSC) nach DIN 53765, (Version von 1994) bei einer Heizrate von 10 K/min mit Bestimmung der Tg als Mittelpunkttemperatur (Tangentenmethode) ermittelt.

Die Pfropfgrundlage B.2 hat im allgemeinen eine mittlere Teilchengröße (d50-Wert) von 0,05 bis 10,00 µm, vorzugsweise 0,10 bis 5,00 µm, weiter bevorzugt 0,15 bis 1,00 µm, und besonders bevorzugt von 0,2 bis 0,7 µm.

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. Styrol oder Methylmethacrylat) oder EPDM-Kautschuke (d. h. solche auf Basis Ethylen/Propylen und Dien) mit der Maßgabe, dass die Glasübergangstemperatur der Komponente B.2 unterhalb < 10°C, vorzugsweise < 0°C, besonders bevorzugt < -20°C liegt.

Bevorzugt ist reiner Polybutadienkautschuk. In einer weiteren Ausführungsform handelt es sich bei B.2 um Styrol-Butadien-Blockcopolymer-Kautschuk.

Der Gelanteil der Pfropfgrundlage B.2 beträgt mindestens 30 Gew.-%, vorzugsweise mindestens 40 Gew.-%, besonders bevorzugt mindestens 70 Gew.-% (in Toluol gemessen).

Der Gelgehalt der Pfropfgrundlage B.2 als auch der Komponente B wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Pfropfpolymerisat gemäß Komponente B sind ABS- Polymerisate hergestellt im Emulsionspolymerisationsverfahren, wie sie z.B. in Ullmanns, Enzyklopädie der Technischen Chemie, Bd. 19 (1980), S. 280 ff. beschrieben sind.

Vorzugsweise weist das Pfropfpolymerisat aus den Komponenten B.1 und B.2 eine Kern-Schale-Struktur auf, wobei die Komponente B.1 die Schale bildet (auch als Hülle bezeichnet) und die Komponente B.2 den Kern ausbildet (siehe bspw. Ullmann's Encyclopedia of Industrial Chemistry, VCH-Verlag, Vol. A21, 1992, Seite 635 und Seite 656.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter kautschukmodifizierte Pfropfpolymerisaten gemäß Komponente B auch solche Produkte verstanden, die durch (Co)Polymerisation der Pfropfmonomere B.1 in Gegenwart der Pfropfgrundlage B.2 gewonnen werden und bei der Aufarbeitung mit anfallen.

### Komponente C

Die Zusammensetzung kann als weitere Komponente C (Co)Polymerisate von mindestens einem Monomeren aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren enthalten.

Insbesondere geeignet sind als Komponente C (Co)Polymerisate aus
C.1 50 bis 99 Gew.-%, bevorzugt 65 bis 85 Gew.-%, besonders bevorzugt 70 bis 80 Gew.-% bezogen auf das (Co)Polymerisat C mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und
C.2 1 bis 50 Gew.-%, bevorzugt 15 bis 35 Gew.-%, besonders bevorzugt 20 bis 30 Gew.-% bezogen auf das (Co)Polymerisat C mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate C sind harzartig, thermoplastisch und kautschukfrei. Besonders bevorzugt ist das Copolymerisat aus C.1 Styrol und C.2 Acrylnitril.

Derartige (Co)Polymerisate C sind bekannt und lassen sich durch radikalische Polymerisation, insbesondere durch Emulsions-, Suspensions-, Lösungs- oder Massepolymerisation herstellen. Die (Co)Polymerisate C besitzen ein gewichtsgemitteltes Molekulargewicht (Mw), bestimmt per Gelpermeationschromatographie mit GPC in Tetrahydrofuran mit Polystyrol als Standard, von bevorzugt 50000 bis 200000 g/mol, besonders bevorzugt von 70000 bis 150000 g/mol, besonders bevorzugt von 80000 bis 120000 g/mol.

### Komponente D

Phosphorhaltige Flammschutzmittel D im erfindungsgemäßen Sinne sind ausgewählt aus den Gruppen der Mono- und oligomeren Phosphor- und Phosphonsäureester, wobei auch Mischungen von mehreren Komponenten als Flammschutzmittel zum Einsatz kommen können.

Mono- und oligomere Phosphor- bzw. Phosphonsäureester in Sinne dieser Erfindung sind Phosphorverbindungen der allgemeinen Formel (IV) 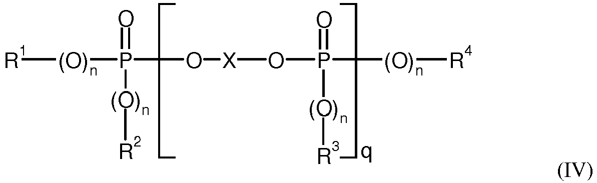 worin
R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1, vorzugsweise ist n gleich 1.
q für ganzzahlige Werte von 1 bis 30, bevorzugt 1 bis 20, besonders bevorzugt 1 bis 10, im Falle von Mischungen für Durchschnittswerte von 1,01 bis 5,0, bevorzugt 1,02 bis 3,0, weiter bevorzugt 1,05 bis 2,00, und besonders bevorzugt von 1,08 bis 1,60 steht
X einen mehrkernigen aromatischen Rest mit 13 bis 30 C-Atomen, der gegebenenfalls mit Halogen- und/oder Alkylgruppen, vorzugsweise Chlor, Brom und/oder C1 bis C4-Alkyl substituiert sein kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X steht besonders bevorzugt für 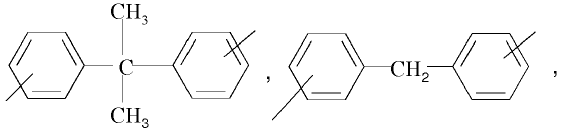 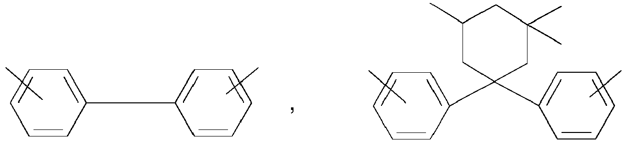 oder deren chlorierte oder bromierte Derivate, insbesondere leitet sich X von Bisphenol A oder Diphenylphenol ab. Besonders bevorzugt leitet sich X von Bisphenol A ab.

Höchst bevorzugt als Komponente D ist Bisphenol-A basierendes Oligophosphat gemäß Formel (IVa).

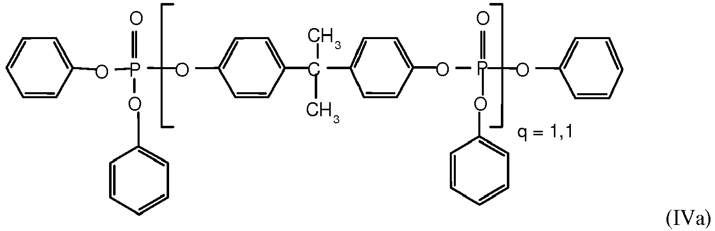

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäße Komponente D können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung der Phosphorverbindung (Molekulargewichtsverteilung) bestimmt wird und daraus die Mittelwerte für q berechnet werden.

### Komponente E

Als Komponente E enthalten die thermoplastischen Formmassen einen mineralischen Füllstoff auf Basis von Talk.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Es können auch Mischungen verschiedener mineralischer Füllstoffe auf Basis von Talk zum Einsatz kommen.

Erfindungsgemäß sind mineralische Füllstoffe, die einen Gehalt an Talk nach DIN 55920 (Version von 2006) von größer 80 Gew.-%, bevorzugt größer 95 Gew.-% und besonders bevorzugt größer 98 Gew.-%, bezogen auf die Gesamtmasse an Füllstoff aufweisen.

Unter Talk wird ein natürlich vorkommender oder synthetisch hergestellter Talk verstanden.

Bei reinem Talk handelt sich um ein Silikat mit Schichtstruktur.

Unter Talk wird ein natürlich vorkommender oder synthetisch hergestellter Talk verstanden.

Die als Komponente E zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Die besonders bevorzugten Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße d₅₀ von 0,2 bis 10 µm, bevorzugt 0,5 bis 5 µm, weiter bevorzugt 0,7 bis 2,5 µm, und besonders bevorzugt 1,0 bis 2,0 µm.

Die mittlere Teilchengröße d₅₀ ist der Durchmesser, oberhalb und unterhalb dessen jeweils 50 Gew.-% der Teilchen liegen. Es können auch Mischungen von Talk-Typen eingesetzt werden, die sich in ihrer mittleren Teilchengröße d₅₀ unterscheiden.

Die erfindungsgemäß einzusetzenden Talktypen haben bevorzugt eine obere Teilchen- bzw. Korngröße d₉₇ kleiner 50 µm, bevorzugt kleiner 10 µm, besonders bevorzugt kleiner 6 µm und insbesondere bevorzugt kleiner 2,5 µm. Die d₉₇- und d₅₀-Werte des Talks werden nach Sedimentationsanalyse mit Sedigraph 5100 (Micromeritics GmbH, Erftstrasse 43, 41238 Mönchengladbach, Deutschland) nach ISO 13317-1 und ISO 13317-3 (Version von 2000) bestimmt.

Der Talk kann oberflächenbehandelt, z.B. silanisiert sein, um eine bessere Verträglichkeit mit dem Polymer zu gewährleisten. Der Talk kann beispielsweise mit einem Haftvermittlersystem auf Basis funktionalisierter Silane ausgerüstet sein.

Im Hinblick auf die Verarbeitung und Herstellung der Formmassen ist auch der Einsatz kompaktierten Talks vorteilhaft.

Der eingesetzte Talk kann bedingt durch die Verarbeitung zur Formmasse bzw. zu Formkörpern in der Formmasse bzw. im Formkörper einen kleineren d₉₇- bzw. dso-Wert aufweisen, als in der ursprünglich eingesetzten Form.

### Komponente F

Die Zusammensetzung enthält als Komponente F handelsübliche Polymeradditive verschieden von den Komponenten D und E. Als handelsübliche Polymeradditive gemäß Komponente F kommen Additive wie Flammschutzsynergisten, Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Stearylstearat, Montanwachs oder Polyethylenwax), Fließfähigkeitshilfsmittel, Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, sowie Farbstoffe und Pigmente (beispielsweise Ruß, Titandioxid oder Eisenoxid), und Brönstedt-saure Verbindungen als Basenfänger, oder aber Mischungen mehrerer der genannten Additive in Frage.

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1000, vorzugsweise 0,08 bis 20 µm. Im allgemeinen haben die fluorierten Polyolefine eine Dichte von 1,2 bis 2,3 g/cm³. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluoropolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, McGraw-Hill, Inc., New York, Seite 134 und 774; "Modern Plastics Encyclopedia", 1975-1976, Oktober 1975, Band 52, Nr. 10 A, McGraw-Hill, Inc., New York, Seite 27, 28 und 472 und US-PS 3 671 487, 3 723 373 und 3 838 092).

Geeignete, in Pulverform einsetzbare fluorierte Polyolefine D sind Tetrafluorethylenpolymerisate mit mittleren Teilchendurchmesser von 100 bis 1000 µm und Dichten von 2,0 g/cm³ bis 2,3 g/cm³. Geeignete Tetrafluorethylenpolymerisat-Pulver sind handelsübliche Produkte und werden beispielsweise von der Fa. DuPont unter dem Handelsnamen Teflon® angeboten.

Besonders bevorzugt enthalten die erfindungsgemäßen Zusammensetzungen mindestens ein Entformungsmittel, vorzugsweise Pentaerythrittetrastearat in Gew.-Anteilen von 0,1 bis 1,0 % bezogen auf die Summe der Komponenten A bis E und mindestens einen Stabilisator, vorzugsweise ein phenolisches Antioxidanz , besonders bevorzugt 2,6-Di-tert-butyl-4-(octadecanoxycarbonylethyl)-phenol in Gew.-Anteilen von 0,01 bis 1,0 % bezogen auf die Summe der Komponenten A bis F.

Aus den erfindungsgemäßen Zusammensetzungen enthaltend die Komponenten A bis F und gegebenenfalls weitere Komponenten können Formmassen hergestellt werden. Dazu werden die Komponenten in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert. In einem weiteren Verarbeitungsschritt können aus den Formmassen Formkörper hergestellt werden.

Die Zusammensetzungen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte, wie TV- und HiFi-Geräte, Kaffeemaschinen, Mixer, Büromaschinen, wie Monitore oder Drucker, oder Abdeckplatten für den Bausektor und Teile für den Kfz-Sektor.

Besonders geeignet sind die Zusammensetzungen zur Herstellung von dünnwandigen Gehäuseteilen im Elektro- und Elektronikbereich.

Eine weitere Form der Verarbeitung ist die Herstellung von Formkörpern durch Blasformen oder durch Tiefziehen aus vorher hergestellten Platten oder Folien.

### Beispiele

### Komponente A-1:

Lineares Polycarbonat auf Basis Bisphenol-A mit einem gewichtsgemittelten Molekulargewicht Mw von 25000 g/mol (bestimmt durch GPC in Methylenchlorid mit Polycarbonat als Standard).

### Komponente A-2:

Lineares Polycarbonat auf Basis Bisphenol-A mit einem gewichtsgemittelten Molekulargewicht Mw von 32000 g/mol (bestimmt durch GPC in Methylenchlorid mit Polycarbonat als Standard).

### Komponente A-3:

Verzweigtes Polycarbonat auf Basis Bisphenol-A mit einem gewichtsgemittelten Molekulargewicht M_{w} von 32000 g/mol (bestimmt durch GPC in Methylenchlorid mit Polycarbonat als Standard).

### Komponente B:

Pfropfpolymerisat von 45 Gew.-Teilen eines Copolymerisats aus Styrol und Acrylnitril im Verhältnis von 72:28 auf 55 Gew.-Teilen eines teilchenförmigen vernetzten Polybutadienkautschuks (Teilchendurchmesser von d₅₀ = 300 bis 400 nm) hergestellt durch Emulsionspolymerisation.

### Komponente C:

SAN-Copolymerisat mit einem Acrylnitrilgehalt von 23 Gew.-% und einem gewichtsgemittelten Molekulargewicht von etwa 130.000 g/mol (bestimmt durch GPC in Tetrahydrofuran mit Polystyrol als Standard).

### Komponente D:

### Bisphenol-A-basierendes Oligophosphat

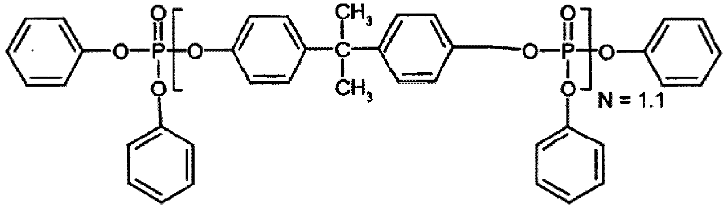

### Komponente E:

Talk, HTP Ultra der Firma Imi Fabi mit einem MgO-Gehalt von 31,0 Gew.-%, einem SiO₂-Gehalt von 61,5 Gew.-% und einem Al₂O₃-Gehalt von 0,4 Gew.-%, mittlere Teilchengröße d₅₀ = 0,5 µm.
**Komponente F-1:** Cycolac INP449: Polytetrafluoroethylen (PTFE) Präparat der Firma Sabic bestehend aus 50 Gew.-% PTFE enthalten in einer SAN-Copolymermatrix.
**Komponente F-2:** Pentaerythrittetrastearat
**Komponente F-3:** Irganox B 900 (Hersteller: BASF).
**Komponente F-4:** Pural 200, AlO(OH) mit Boehmit-Struktur (Hersteller: Sasol Germany GmbH)
**Komponente F-5:** Industrieruß, Black pearls (Hersteller: Cabot Corporation)

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C. Die Formkörper wurden bei einer Massetemperatur von 260°C und einer Werkzeugtemperatur von 80°C auf einer Spritzgießmaschine Typ Arburg 270 E hergestellt.

Der MVR wird bestimmt gemäß ISO 1133 (Version von 2012) bei 240°C unter Verwendung einer Stempellast von 5kg. Dieser Wert ist in der Tabelle 1 als "MVR-Wert der Ausgangsprobe" bezeichnet.

Als Maß für die Hydrolysebeständigkeit dient die Änderung des MVR bei einer Lagerung des Granulats für 5 Tage bei 95°C und 100% relativer Luftfeuchtigkeit.

Die Schlagzähigkeit (Bindenahtfestigkeit) wird bei 23°C gemäß ISO 179/leU (Version von 2010) an Prüfkörpern der Abmessung 80 mm x 10 mm x 4 mm bestimmt.

Die Reißdehnung wird gemäß ISO 527 (Version von 1996) bei Raumtemperatur bestimmt.

Die Flammwidrigkeit wird gemäß UL94V an Stäben der Abmessung 127 x 12,7 x 1,5 mm beurteilt.

Als Maß für die Chemikalienbeständigkeit dient die Spannungsriss-(ESC)-Beständigkeit in Toluol/Isopropanol (60/40 Vol.-Teile) bei Raumtemperatur. Bestimmt wird die Zeit bis zum spannungsrissinduzierten Bruchversagen eines bei 260°C Massetemperatur abgespritzten Prüfkörpers der Abmessung 80 mm x 10 mm x 4 mm, der mittels einer Spannschablone mit einer externen Randfaserdehnung von 2,4% beaufschlagt und im Medium vollständig eingetaucht wird. Die Messung erfolgt in Anlehnung an ISO 22088 (Version von 2006).

**Tabelle 1: Formmassen und ihre Eigenschaften**

| **Komponenten [Gew.-Teile]** | **1 Vgl.** | **2** | **3** | **4 Vgl.** | **5** | **6 Vgl.** | **7** | **8 Vgl.** |
|---|---|---|---|---|---|---|---|---|
| A-1 | 76,0 | 75,0 | 73,0 | 71,0 | - | - | - | - |
| A-2 | - | - | - | - | 75,0 | - | 73,0 | - |
| A-3 | - | - | - | - | - | 75,0 | - | 73,0 |
| B | 7,7 | 7,7 | 7,7 | 7,7 | 7,7 | 7,7 | 7,7 | 7,7 |
| C | 4,7 | 4,7 | 4,7 | 4,7 | 4,7 | 4,7 | 4,7 | 4,7 |
| D | 10,0 | 10,0 | 10,0 | 10,0 | 10,0 | 10,0 | 10,0 | 10,0 |
| E | - | 1,0 | 3,0 | 5,0 | 1,0 | 1,0 | 3,0 | 3,0 |
| F-1 | 0,8 | 0,8 | 0,8 | 0,8 | 0,8 | 0,8 | 0,8 | 0,8 |
| F-2 | 0,4 | 0,4 | 0,4 | 0,4 | 0,4 | 0,4 | 0,4 | 0,4 |
| F-3 | 0,1 | 0,1 | 0,1 | 0,1 | 0,1 | 0,1 | 0,1 | 0,1 |
| F-4 | 0,3 | 0,3 | 0,3 | 0,3 | 0,3 | 0,3 | 0,3 | 0,3 |
| F-5 | - | - | - | - | - | - | - | - |

| **Eigenschaften** | | | | | | | | |
|---|---|---|---|---|---|---|---|---|
| Bindenahtfestigkeit [kJ/m²] | 11 | 9 | 8 | 7 | 11 | 9 | 8 | 8 |
| Reißdehnung [%] | 117 | 105 | 93 | 65 | 102 | 46 | 64 | 31 |
| E-Modul [MPa] | 2570 | 2700 | 2860 | 3140 | 2600 | 2600 | 2880 | 2800 |
| UL94V Bewertung bei 1,5 mm | V0 | V0 | V0 | V0 | V0 | V0 | V0 | V0 |
| Gesamte NBZ [s] (nach 7 Tage Lagerung bei 70°C) | 19 | 22 | 20 | 15 | 36 | 43 | 32 | 33 |
| ESC-Verhalten [Bruch nach min:sec] | 02:30 | 07:45 | 10:00 | 10:00 | 10:00 | 10:00 | 10:00 | 10:00 |
| MVR-Ausgangsprobe [cm³/10min] | 12 | 13 | 11 | 9 | 7 | 5 | 6 | 4 |
| MVR nach Lagerung (5 Tage) [cm³/10min] | 66 | 41 | 32 | 27 | 26 | 24 | 23 | 19 |
| Zunahme des MVR relativ zur Ausgangsprobe (in %, Lagerung 5 Tage) | 450 | 215 | 190 | 200 | 271 | 380 | 283 | 375 |

| | | | | | | | | |
|---|---|---|---|---|---|---|---|---|
| n.m.: nicht messbar (Probe zu niederviskos) | | | | | | | | |

**Tabelle 2: Formmassen und ihre Eigenschaften**

| **Komponenten [Gew.-Teile]** | **9 Vgl.** | **10** | **11** | **12 Vgl.** | **13 Vgl.** | **14** | **15** | **16 Vgl.** | **17** | **18 Vgl.** | **19** | **20 Vgl.** |
|---|---|---|---|---|---|---|---|---|---|---|---|---|
| A-1 | 93,3 | 92,3 | 90,3 | 88,3 | 72,3 | 71,3 | 69,3 | 67,3 | - | - | - | - |
| A-2 | - | - | - | - | - | - | - | - | 71,8 | - | 69,8 | - |
| A-3 | - | - | - | - | - | - | - | - | - | 71,8 | - | 69,8 |
| B | 3,0 | 3,0 | 3,0 | 3,0 | 9,0 | 9,0 | 9,0 | 9,0 | 9,0 | 9,0 | 9,0 | 9,0 |
| C | - | - | - | - | - | - | - | - | - | - | - | - |
| D | 2,3 | 2,3 | 2,3 | 2,3 | 17,0 | 17,0 | 17,0 | 17,0 | 17,0 | 17,0 | 17,0 | 17,0 |
| E | - | 1,0 | 3,0 | 5,0 | - | 1,0 | 3,0 | 5,0 | 1,0 | 1,0 | 3,0 | 3,0 |
| F-1 | 0,8 | 0,8 | 0,8 | 0,8 | 0,7 | 0,7 | 0,7 | 0,7 | 0,7 | 0,7 | 0,7 | 0,7 |
| F-2 | 0,5 | 0,5 | 0,5 | 0,5 | 0,4 | 0,4 | 0,4 | 0,4 | 0,4 | 0,4 | 0,4 | 0,4 |
| F-3 | 0,1 | 0,1 | 0,1 | 0,1 | 0,1 | 0,1 | 0,1 | 0,1 | 0,1 | 0,1 | 0,1 | 0,1 |
| F-4 | - | - | - | - | - | - | - | - | - | - | - | - |
| F-5 | - | - | - | - | 0,5 | 0,5 | 0,5 | 0,5 | - | - | - | - |

| **Eigenschaften** | | | | | | | | | | | | |
|---|---|---|---|---|---|---|---|---|---|---|---|---|
| Bindenahtfestigkeit [kJ/m²] | 121 | 33 | 15 | 11 | 26 | 13 | 8 | 6 | 19 | 16 | 11 | 10 |
| Reißdehnung [%] | 132 | 110 | 108 | 107 | 39 | 19 | 13 | 12 | 109 | 62 | 55 | 32 |
| E-Modul [MPa] | 2360 | 2500 | 2750 | 2980 | 2560 | 2670 | 2400 | 3000 | 2620 | 2630 | 2890 | 2850 |
| UL94V Bewertung bei 1,5 mm | V0 | V0 | V0 | V0 | V0 | V0 | V0 | V0 | V0 | V0 | V0 | V0 |
| Gesamte NBZ [s] (nach 7 Tage Lagerung bei 70°C) | 15 | 10 | 10 | 11 | 11 | 11 | 19 | 10 | 11 | 12 | 10 | 10 |
| ESC-Verhalten [Bruch nach min:sec] | 00:25 | 00:50 | 01:40 | ^{.}01:53 | 01:35 | 02:20 | 03:00 | 03:25 | 10:00 | 10:00 | 10:00 | 10:00 |
| MVR-Ausgangsprobe [cm³/10min] | 17 | 15 | 14 | 13 | 39 | 34 | 35 | 37 | 12 | 9 | 12 | 9 |
| MVR nach Lagerung (5 Tage) [cm³/10min] | 32 | 24 | 20 | 19 | n.m. | 123 | 100 | 89 | 56 | 54 | 47 | 41 |
| Zunahme des MVR relativ zur Ausgangsprobe (in %, Lagerung 5 Tage) | 88 | 60 | 42 | 46 | n.m. | 261 | 185 | 141 | 366 | 500 | 291 | 355 |

| | | | | | | | | | | | | |
|---|---|---|---|---|---|---|---|---|---|---|---|---|
| n.m.: nicht messbar (Probe zu niederviskos) | | | | | | | | | | | | |

**Tabelle 3: Formmassen und ihre Eigenschaften**

| **Komponenten [Gew.-Teile]** | **21 Vgl.** | **22** | **23** | **24 Vgl.** | **25 Vgl.** | **26** | **27** | **28 Vgl.** | **29** | **30 Vgl.** |
|---|---|---|---|---|---|---|---|---|---|---|
| A-1 | 75,1 | 74,1 | 72,1 | 70,1 | 72,6 | 71,6 | 69,6 | 67,6 | 73,45 | 73,45 |
| A-2 | - | - | - | - | - | - | - | - | - | - |
| A-3 | - | - | - | - | - | - | - | - | - | - |
| B | 7,9 | 7,9 | 7,9 | 7,9 | 9,0 | 9,0 | 9,0 | 9,0 | 6,6 | 5,7 |
| C | 1,6 | 1,6 | 1,6 | 1,6 | 4,7 | 4,7 | 4,7 | 4,7 | 5,1 | 6,0 |
| D | 14,0 | 14,0 | 14,0 | 14,0 | 12,5 | 12,5 | 12,5 | 12,5 | 12,5 | 12,5 |
| E | - | 1,0 | 3,0 | 5,0 | - | 1,0 | 3,0 | 5,0 | 1,0 | 1,0 |
| F-1 | 1,0 | 1,0 | 1,0 | 1,0 | 0,8 | 0,8 | 0,8 | 0,8 | 0,8 | 0,8 |
| F-2 | 0,4 | 0,4 | 0,4 | 0,4 | 0,4 | 0,4 | 0,4 | 0,4 | 0,4 | 0,4 |
| F-3 | 0,1 | 0,1 | 0,1 | 0,1 | 0,1 | 0,1 | 0,1 | 0,1 | 0,1 | 0,1 |
| F-4 | - | - | - | - | - | - | - | - | - | - |
| F-5 | - | - | - | - | - | - | - | - | - | - |

| **Eigenschaften** | | | | | | | | | | |
|---|---|---|---|---|---|---|---|---|---|---|
| Bindenahtfestigkeit [kJ/m²] | 12 | 11 | 8 | 6 | 9 | 8 | 7 | 5 | 9 | 8 |
| Reißdehnung [%] | 120 | 100 | 86 | 74 | 71 | 120 | 80 | 52 | 110 | 99 |
| E-Modul [MPa] | 2680 | 2770 | 3080 | 3100 | 2500 | 2620 | 2840 | 3000 | 2730 | 2800 |
| UL94V Bewertung bei 1,5 mm | V0 | V0 | V0 | V0 | V0 | V0 | V0 | V0 | V0 | V0 |
| Gesamte NBZ [s] (nach 7 Tage Lagerung bei 70°C) | 10 | 12 | 10 | 11 | 13 | 14 | 16 | 13 | 15 | 18 |
| ESC-Verhalten [Bruch nach min:sec] | 02:00 | 02:10 | 10:00 | 10:00 | 03:30 | 04:32 | 10:00 | 10:00 | 10:00 | 10:00 |
| MVR-Ausgangsprobe [cm³/10min] | 17 | 17 | 16 | 15 | 19 | 18 | 18 | 16 | 18 | 21 |
| MVR nach Lagerung (5 Tage) [cm³/10min] | n.m. | 65 | 46 | 39 | n.m. | 69 | 45 | 48 | 59 | 62 |
| Zunahme des MVR relativ zur Ausgangsprobe (in %, Lagerung 5 Tage) | n.m. | 282 | 176 | 160 | n.m. | 283 | 150 | 200 | 227 | 195 |

| | | | | | | | | | | |
|---|---|---|---|---|---|---|---|---|---|---|
| n.m.: nicht messbar (Probe zu niederviskos) | | | | | | | | | | |

Die Beispiele aus Tabelle 1 zeigen, dass nur mit den Zusammensetzungen enthaltend den erfindungsgemäßen Anteil an Talk eine gute Kombination aus hoher Reißdehnung, guter Bindenahtfestigkeit, hoher Chemikalienbeständigkeit und guter Hydrolysebeständigkeit erreicht wird. Wird kein Talk verwendet, ist die Hydrolysebeständigkeit unzureichend. Wird ein zu hoher Talkanteil eingesetzt, so verschlechtern sich die Bindenahtfestigkeit und die Reißdehnung in nicht mehr akzeptabler Weise.

## Patentansprüche

1. Zusammensetzungen enthaltend
A) 62 bis 96 Gew.-% mindestens eines Polymers ausgewählt aus der Gruppe bestehend aus linearem aromatischen Polycarbonat und linearem aromatischen Polyestercarbonat,
B) 1 bis 15 Gew.-% mindestens eines Pfropfpolymerisats hergestellt durch Emulsionspolymerisation aus
B.1) 5 bis 95 Gew.-%, bezogen auf B, einer Mischung aus
B.1.1) 50 bis 99 Gew.-%, bezogen auf B.1, mindestens eines Monomeren ausgewählt aus der Gruppe der Vinylaromaten, kernsubstituierten Vinylaromaten und Acrylsäure-(C1-C8)-Alkylester oder Mischungen dieser Verbindungen
und
B.1.2) 1 bis 50 Gew.-%, bezogen auf B.1, mindestens eines Monomeren ausgewählt aus der Gruppe der Vinylcyanide, Acrylsäure-(C1-C8)-Alkylester, ungesättigte Carbonsäuren und Derivate ungesättigter Carbonsäuren
B.2) 5 bis 95 Gew.-%, bezogen auf B, einer kautschukhaltigen Pfropfgrundlage enthaltend einen Dienkautschuk oder ein Copolymerisat eines Dienkautschuks mit einem weiteren copolymerisierbaren Monomeren,
C) 0 bis 5,8 Gew.-% kautschukfreies Vinyl(co)polymerisat,
D) 1 bis 20 Gew.-% mindestens eines phosphorhaltigen Flammschutzmittels der allgemeinen Formel (IV) 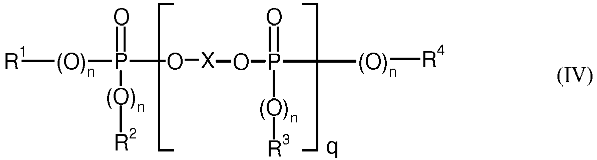 worin
R1, R2, R3 und R4, unabhängig voneinander jeweils gegebenenfalls halogeniertes C1 bis C8-Alkyl, jeweils gegebenenfalls durch Alkyl substituiertes C5 bis C6-Cycloalkyl, C6 bis C20-Aryl oder C7 bis C12-Aralkyl,
n unabhängig voneinander 0 oder 1
q für ganzzahlige Werte von 1 bis 30
X einen mehrkernigen aromatischen Rest mit 13 bis 30 C-Atomen, der gegebenenfalls mit Halogen- und/oder Alkylgruppen substituiert sein kann, bedeuten,
E) 0,8 bis 4,0 Gew.-% eines mineralischen Füllstoffs auf Basis von Talk mit einer Teilchengröße d₅₀ von 0,2 bis 10 µm,
F) 0,1 bis 20,0 Gew.-% mindestens eines Polymeradditivs,
wobei die Zusammensetzungen kein Pfropfpolymerisat hergestellt in Massepolymerisation enthalten.

2. Zusammensetzungen gemäß Anspruch 1 enthaltend
64 bis 95 Gew.-% der Komponente A,
2 bis 12 Gew.-% der Komponente B,
0 bis 5,5 Gew.-% der Komponente C,
1 bis 19 Gew.-% der Komponente D,
0,9 bis 3,5 Gew.-% der Komponente E und
0,2 bis 15 Gew.-% der Komponente F.

3. Zusammensetzungen gemäß Anspruch 1 enthaltend
66 bis 94 Gew.-% der Komponente A,
3 bis 10 Gew.-% der Komponente B,
0 bis 5,2 Gew.-% der Komponente C,
2 bis 18 Gew.-% der Komponente D,
1,0 bis 3,0 Gew.-% der Komponente E und
0,3 bis 10 Gew.-% der Komponente F.

4. Zusammensetzungen gemäß einem der vorherigen Ansprüche, wobei die Komponente A ein gewichtsgemitteltes Molekulargewicht Mw von 24.000 bis 28.000 g/mol aufweist.

5. Zusammensetzungen gemäß einem der vorherigen Ansprüche, wobei die Komponente B aus 40 bis 70 Gew.-% B.1 und 60 bis 30 Gew.-% B.2, jeweils bezogen auf B, besteht.

6. Zusammensetzungen gemäß einem der vorherigen Ansprüche, wobei als Komponente B1.1 Styrol und als Komponente B1.2 Acrylnitril eingesetzt wird.

7. Zusammensetzungen gemäß einem der vorherigen Ansprüche, wobei es sich bei Komponente D um eine Verbindung gemäß folgender Struktur handelt

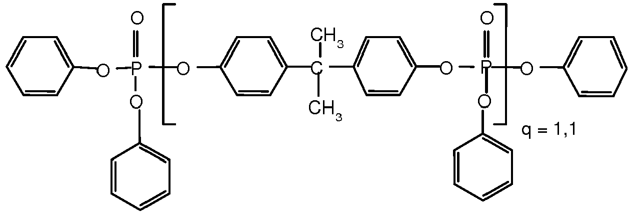

8. Zusammensetzungen gemäß einem der vorherigen Ansprüche, wobei es sich bei Komponente E um Talk mit einen MgO-Gehalt von 28 bis 35 Gew.-%, einen SiO₂-Gehalt von 55 bis 65 Gew.-% und einen Al₂O₃-Gechalt von kleiner 1 Gew.-% handelt.

9. Zusammensetzungen gemäß einem der vorherigen Ansprüche, wobei die Komponente E eine Teilchengröße d₅₀ von 0,7 bis 2,5 µm aufweist.

10. Zusammensetzungen gemäß einem der vorherigen Ansprüche, wobei die Komponente E einen MgO-Gehalt von 30,5 bis 32 Gew.-% aufweist.

11. Zusammensetzungen gemäß einem der vorherigen Ansprüche, wobei als Komponente F eines oder mehrere Additive verwendet wird aus der Gruppe bestehend aus Flammschutzsynergisten, Antidrippingmittel, Gleit- und Entformungsmittel, Fließfähigkeitshilfsmittel, Antistatika Leitfähigkeitsadditive, Stabilisatoren, antibakteriell wirkende Additive, kratzfestigkeitsverbessernde Additive, IR-Absorbentien, optische Aufheller, fluoreszierende Additive, Farbstoffe, Pigmente sowie Brönstedt-saure Verbindungen.

12. Zusammensetzungen gemäß einem der vorherigen Ansprüche, wobei die Zusammensetzungen nur aus den Komponenten A bis F bestehen.

13. Verwendung von Zusammensetzungen gemäß einem der Ansprüche 1 bis 12 zur Herstellung von Formkörpern.

14. Formkörper erhältlich aus Zusammensetzungen gemäß einem der Ansprüche 1 bis 12.

## Claims

1. Compositions comprising
A) from 62 to 96% by weight of at least one polymer selected from the group consisting of linear aromatic polycarbonate and linear aromatic polyester carbonate,
B) from 1 to 15% by weight of at least one graft polymer produced by emulsion polymerization from
B.1) from 5 to 95% by weight, based on B, of a mixture of
B.1.1) from 50 to 99% by weight, based on B.1, of at least one monomer selected from the group of the vinylaromatics, ring-substituted vinylaromatics and C1-C8-alkyl acrylates and mixtures of these compounds
and
B.1.2) from 1 to 50% by weight, based on B.1, of at least one monomer selected from the group of the vinyl cyanides, C1-C8-alkyl acrylates, unsaturated carboxylic acids and derivatives of unsaturated carboxylic acids
B.2) from 5 to 95% by weight, based on B, of a rubber-containing graft base comprising a diene rubber or comprising a copolymer of a diene rubber with another copolymerizable monomer,
C) from 0 to 5.8% by weight of rubber-free vinyl (co)polymer,
D) from 1 to 20% by weight of at least one phosphorus-containing flame retardant of the general formula (IV) 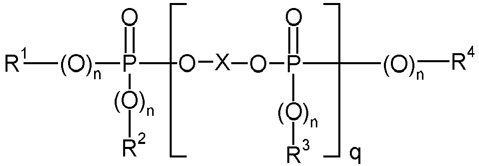 (IV) in which
R1, R2, R3 and R4, mutually independently respectively denote optionally halogenated C1 to C8-alkyl, respectively optionally alkyl-substituted C5 to C6-cycloalkyl, C6 to C20-aryl or C7 to C12-aralkyl,
n mutually independently denotes 0 or 1
q denotes integral values from 1 to 30
X denotes a polynuclear aromatic moiety having from 13 to 30 C atoms which can optionally have substituent halogen groups and/or substituent alkyl groups,
E) from 0.8 to 4.0% by weight of a mineral filler based on talc with a d₅₀ particle size from 0.2 to 10 µm,
F) from 0.1 to 20.0% by weight of at least one polymer additive,
where the compositions comprise no graft polymer produced by bulk polymerization.

2. Compositions according to Claim 1 comprising
from 64 to 95% by weight of component A,
from 2 to 12% by weight of component B,
from 0 to 5.5% by weight of component C,
from 1 to 19% by weight of component D,
from 0.9 to 3.5% by weight of component E and
from 0.2 to 15% by weight of component F.

3. Compositions according to Claim 1 comprising
from 66 to 94% by weight of component A,
from 3 to 10% by weight of component B,
from 0 to 5.2% by weight of component C,
from 2 to 18% by weight of component D,
from 1.0 to 3.0% by weight of component E and
from 0.3 to 10% by weight of component F.

4. Compositions according to any of the preceding claims where the weight-average molar mass Mw of component A is from 24 000 to 28 000 g/mol.

5. Compositions according to any of the preceding claims where component B is composed of from 40 to 70% by weight of B.1 and from 60 to 30% by weight of B.2, based in each case on B.

6. Compositions according to any of the preceding claims where styrene is used as component B1.1 and acrylonitrile is used as component B1.2.

7. Compositions according to any of the preceding claims where component D is a compound according to the following structure

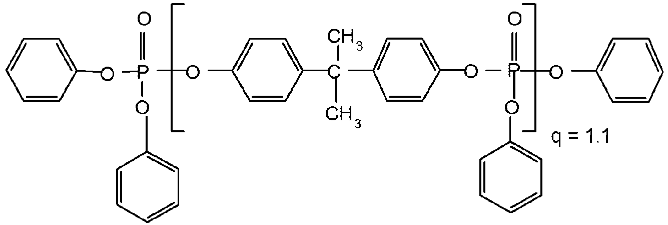

8. Compositions according to any of the preceding claims where component E is talc with from 28 to 35% by weight MgO content, from 55 to 65% by weight SiO₂ content and less than 1% by weight Al₂O₃ content.

9. Compositions according to any of the preceding claims where the d₅₀ particle size of component E is from 0.7 to 2.5 µm.

10. Compositions according to any of the preceding claims where the MgO content of component E is from 30.5 to 32% by weight.

11. Compositions according to any of the preceding claims where component F used comprises one or more additives from the group consisting of flame retardant synergists, antidripping agent, lubricant and mould-release agent, flowability aid, antistatic agents, conductivity additives, stabilizers, antibacterial additives, additives that improve scratch resistance, IR absorbers, optical brightener, fluorescent additives, dyes, pigments and Brönstedt acid compounds.

12. Compositions according to any of the preceding claims where the compositions are composed only of the components A to F.

13. Use of compositions according to any of Claims 1 to 12 for the production of mouldings.

14. Mouldings obtainable from compositions according to any of Claims 1 to 12.

## Revendications

1. Compositions contenant
A) 62 à 96 % en poids d'au moins un polymère choisi dans le groupe constitué par un polycarbonate aromatique linéaire et un polyestercarbonate aromatique linéaire,
B) 1 à 15 % en poids d'au moins un polymérisat greffé préparé par polymérisation en émulsion à partir de
B.1) 5 à 95 % en poids, par rapport à B, d'un mélange composé de
B.1.1) 50 à 99 % en poids, par rapport à B.1, d'au moins un monomère choisi dans le groupe des composés aromatiques vinyliques, des composés aromatiques vinyliques substitués sur le cycle et des esters d'acide acrylique de C₁₋₈-alkyle et des mélanges de ces composés et
B.1.2) 1 à 50 % en poids, par rapport à B.1, d'au moins un monomère choisi dans le groupe des vinylnitriles, des esters d'acide acrylique de C₁₋₈-alkyle, des acides carboxyliques insaturés et des dérivés d'acides carboxyliques insaturés
B.2) 5 à 95 % en poids, par rapport à B, d'une base de greffage contenant un caoutchouc contenant un caoutchouc de diène ou un copolymérisat d'un caoutchouc de diène avec un autre monomère copolymérisable,
C) 0 à 5,8 % en poids d'un (co)polymérisat de vinyle exempt de caoutchouc,
D) 1 à 20 % en poids d'au moins un agent ignifugeant contenant du phosphore de formule générale (IV) 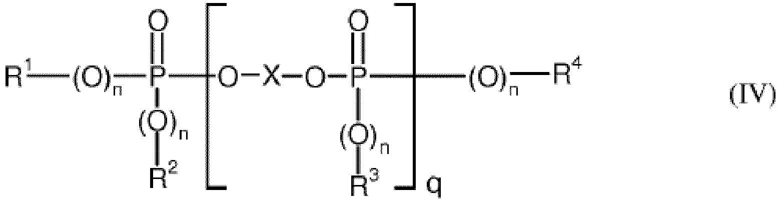 dans laquelle
R1, R2, R3 et R4 indépendamment les uns des autres signifient C₁₋₈-alkyle à chaque fois éventuellement halogéné, C₅₋₆-cycloalkyle à chaque fois éventuellement substitué par alkyle, C₆₋₂₀-aryle ou C₇₋₁₂-aralkyle,
n signifie indépendamment les uns des autres 0 ou 1
q signifie des valeurs de nombre entier de 1 à 30
X signifie un radical aromatique polycyclique comportant 13 à 30 atomes de C, qui peut éventuellement être substitué par des groupes halogène et/ou alkyle,
E) 0,8 à 4,0 % en poids d'une charge minérale à base de talc comportant une grosseur de particule d₅₀ de 0,2 à 10 µm,
F) 0,1 à 20,0 % en poids d'au moins un additif de polymère,
les compositions ne contenant aucun polymérisat greffé préparé par polymérisation en masse.

2. Compositions selon la revendication 1 contenant 64 à 95 % en poids du composant A,
2 à 12 % en poids du composant B,
0 à 5,5 % en poids du composant C,
1 à 19 % en poids du composant D,
0,9 à 3,5 % en poids du composant E et
0,2 à 15 % en poids du composant F.

3. Compositions selon la revendication 1 contenant 66 à 94 % en poids du composant A,
3 à 10 % en poids du composant B,
0 à 5,2 % en poids du composant C,
2 à 18 % en poids du composant D,
1,0 à 3,0 % en poids du composant E et
0,3 à 10 % en poids du composant F.

4. Compositions selon l'une quelconque des revendications précédentes, le composant A présentant un poids moléculaire moyen en poids Mw de 24 000 à 28 000 g/mole.

5. Compositions selon l'une quelconque des revendications précédentes, le composant B étant constitué de 40 à 70 % en poids de B.1 et de 60 à 30 % en poids de B.2, à chaque fois par rapport à B.

6. Compositions selon l'une quelconque des revendications précédentes, du styrène étant utilisé en tant que composant B1.1 et de l'acrylonitrile étant utilisé en tant que composant B1.2.

7. Compositions selon l'une quelconque des revendications précédentes, le composant D étant un composé selon la structure suivante

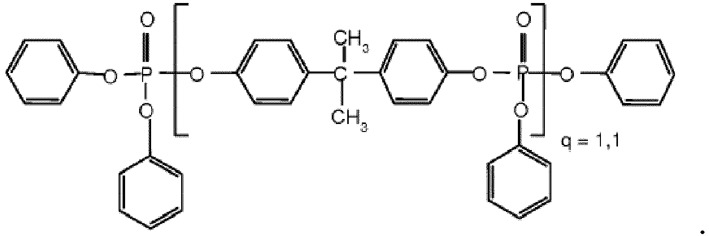

8. Compositions selon l'une quelconque des revendications précédentes, le composant E étant un talc doté d'une teneur en MgO de 28 à 35 % en poids, d'une teneur en SiO₂ de 55 à 65 % en poids et d'une teneur en Al₂O₃ inférieure à 1 % en poids.

9. Compositions selon l'une quelconque des revendications précédentes, le composant E présentant une grosseur de particule d₅₀ de 0,7 à 2,5 µm.

10. Compositions selon l'une quelconque des revendications précédentes, le composant E présentant une teneur en MgO de 30,5 à 32 % en poids.

11. Compositions selon l'une quelconque des revendications précédentes, un ou plusieurs additifs étant utilisés, en tant que composant F, du groupe constitué par des synergistes d'ignifugation, des agents antigoutte, des agents lubrifiants et des agents de démoulage, des auxiliaires de fluidité, des antistatiques, des additifs de conductivité, des stabilisateurs, des additifs à effet antibactérien, des additifs améliorant la résistance aux rayures, des absorbants IR, des azurants optiques, des additifs fluorescents, des colorants, des pigments ainsi que des composés de type acide de Brönsted.

12. Compositions selon l'une quelconque des revendications précédentes, les compositions étant constituées seulement des composants A à F.

13. Utilisation de compositions selon l'une quelconque des revendications 1 à 12 pour la préparation de corps moulés.

14. Corps moulé pouvant être obtenu à partir des compositions selon l'une quelconque des revendications 1 à 12.
